# EUROPÄISCHE PATENTSCHRIFT

(11) **EP 3 523 845 B1**
(45) Veröffentlichungstag und Bekanntmachung des Hinweises auf die Patenterteilung: **28.10.2020**
(21) Anmeldenummer: 18703196.8
(22) Anmeldetag: 17.01.2018
(51) Int. Cl.: H01M 2/12

(54) **BATTERIESTOPFEN MIT ENTGASUNGSVENTIL**
BATTERY STOPPER WITH DEGASSING VALVE
BOUCHON DE BATTERIE AVEC CLAPET DE DÉGAZAGE

(30) Priorität: 03.03.2017 DE 102017002024
(43) Veröffentlichungstag der Anmeldung: 14.08.2019
(73) Patentinhaber: Frötek- Vermögensverwaltung GmbH, 37520 Osterode am Harz (DE)
(72) Erfinder: KOCH, Thomas, 37154 Northeim (DE)
(74) Vertreter: Cohausz Hannig Borkowski Wißgott
(86) Internationale Anmeldenummer: PCT/EP2018/000022
(87) Internationale Veröffentlichungsnummer: WO 2018/157963

(56) Entgegenhaltungen:
- WO-A1-01/82395
- US-A1- 2002 094 473

## Beschreibung

Die Erfindung betrifft einen Batteriestopfen einer Batterie oder einer Batteriezelle, wobei im Batteriestopfen ein Entgasungsventil angeordnet ist, das im Elektrolyt entstandenes Gas ab einer bestimmten Druckhöhe ablässt.

Ein solcher Batteriestopfen ist beispielsweise aus der DE 20 2005 003 835 U1, aus WO 01/82395 A1 und US 2002/094473 A1 bekannt. Der Batteriestopfen weist aufgrund des Entgasungsventils verhältnismäßig viele Teile auf und ist damit aufwändig in der Herstellung.

Aufgabe der Erfindung ist es, einen Batteriestopfen der eingangs genannten Art so zu verbessern, dass der Batteriestopfen bei einfacher Konstruktion und Herstellung aus möglichst wenig Teilen besteht.

Diese Aufgabe wird erfindungsgemäß dadurch gelöst, dass der Stopfeninnenraum durch eine zur Stopfenoberseite rechtwinklig oder schräg angeordnete Querwand in zwei Teilräume aufgeteilt ist, von denen ein erster Teilraum nur mit dem Zelleninnenraum und der zweite Teilraum nur mit der Atmosphäre verbunden ist, wobei die Querwand mindestens einen die beiden Teilräume verbindenden Durchlass aufweist, in oder an dem das Entgasungsventil angeordnet ist. Hierbei kann der Batteriestopfen in einer Öffnung des Deckels der Batterie oder der Batteriezelle einsitzen.

Ein solcher Batteriestopfen ist bis auf das zusätzliche Ventilglied einstückig/einteilig und ist damit besonders einfach in der Herstellung, da in den einstückigen/einteiligen Batteriestopfen nur noch das Ventilglied eingesteckt insbesondere eingeclipst werden muss. Hierbei ist eine sichere Funktion gegeben.

Vorzugsweise wird vorgeschlagen, dass der zweite Teilraum zur Seite hin offen ist, um durch die Innenwand der den Batteriestopfen aufnehmendem Öffnung der Batterie oder Batteriezelle geschlossen zu sein. Hierdurch ist das Ventilglied besonders leicht in den Stopfen einsetzbar.

Besonders vorteilhaft ist es, wenn durch die geneigte, vorzugsweise vertikale Anordnung des Entgasungsventils mitgerissene Elektrolytbestandteile im unmittelbaren Funktionsbereich durch die Schwerkraft reduziert werden. Hierzu weist der untere Bereich des zweiten Teilraums einen Aufnahmebereich für mitgerissene Elektrolytbestandteile auf, die mit dem abzulassenden Gas nach oben gefördert werden.

Das im Batteriestopfen befindliche Ventil ist besonders einfach in der Konstruktion und Herstellung, wenn das durch den Gasdruck öffnende Ventilglied des Entgasungsventils eine Ventilscheibe aus flexiblen Kunststoff aufweist, die den Durchlass der Querwand abdeckt. Hierbei ist die Ventilscheibe auf der Seite der Querwand angeordnet, die dem Teilraum zugewandt ist, der mit der Atmosphäre verbunden ist.

Eine einfache Montage bei sicherem Halt ist dann gegeben, wenn die Ventilscheibe einen Vorsprung insbesondere Zapfen aufweist, der in einer Bohrung der Querwand einliegt. Hierbei kann das freie Ende des Vorsprungs/Zapfens eine Verdickung aufweisen, deren Durchmesser größer ist als der Durchmesser des Vorsprungs/Zapfens.

Vorzugsweise wird vorgeschlagen, dass das Ventilglied eine waagerechte Bohrung aufweist. Hierbei reicht die Bohrung als Sackbohrung bis in den zapfenförmigen Vorsprung hinein. Diese Bohrung erhöht die Flexibilität des Ventilglieds und ist als Montagehilfe nützlich.

Ein Ausführungsbeispiel der Erfindung ist in der Zeichnung dargestellt und wird im Folgenden näher beschrieben. Es zeigen
- Fig. 1: eine perspektivische Ansicht des Batteriestopfens, und
- Fig. 2: einen axialen senkrechten Schnitt durch den Batteriestopfen im eingesetzten Zustand im Batteriedeckel.

Eine Batterie oder eine Batteriezelle weist einen oberen waagerechten Deckel 1 auf, der eine senkrechte Öffnung 2 besitzt, in der ein Batteriestopfen 3 formschlüssig einliegt. Hierbei fluchtet die Oberseite 4 des Batteriestopfens mit der Oberseite 5 der Batterie bzw. der Batteriezelle. Hierbei ist der Batteriestopfen bis auf das Ventilglied 11b des Entgasungsventils 11 einstückig.

Der Innenraum des Batteriestopfens 3 ist durch eine zur Stopfenoberseite senkrechte (bzw. rechtwinklige) oder schräge Querwand 6 in einen ersten Teilraum 7 und einen zweiten Teilraum 8 aufgeteilt, wobei der erste Teilraum 7 nach unten zum Inneren der Batteriezelle offen und nach oben hin geschlossen ist. Der zweite Teilraum 8 ist nach unten geschlossen und weist eine obere Öffnung 9 in der Oberseite 4 auf, wodurch der zweite Teilraum mit der Atmosphäre verbunden ist. Hierbei weist der untere Bereich des zweiten Teilraums 8 einen Aufnahmebereich für Bestandteile insbesondere für Aerosole auf, die mit dem abzulassenden Gas nach oben gefördert werden.

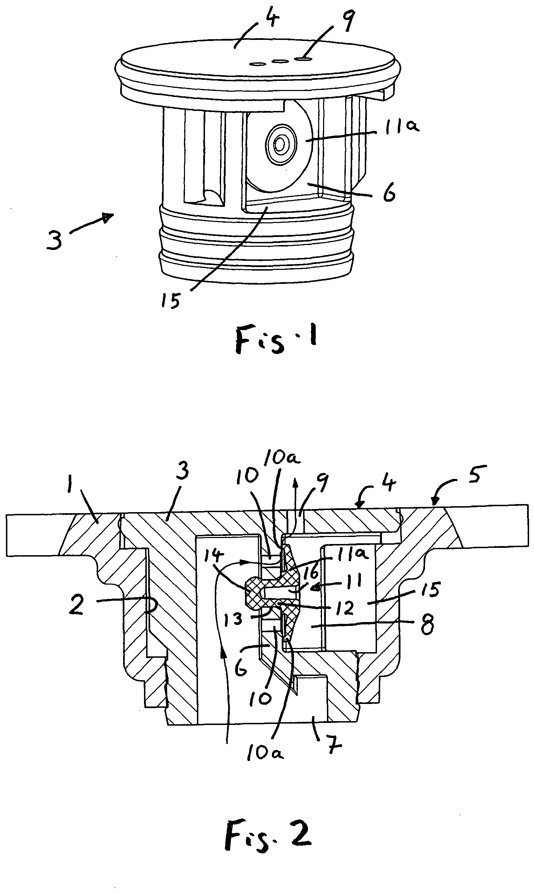

In der Querwand 6 befindet sich mindestens eine Bohrung als Durchlass 10, über die die beiden Teilräume 7, 8 miteinander verbunden sind. Im Ausführungsbeispiel nach Fig. 2 sind zwei Durchlässe 10 in der Querwand 6 dargestellt.

Die Durchlässe 10 sind durch eine Ventilscheibe 11a abgedeckt, die auf der Seitenwand der Querwand 6 aufliegt, die den zweiten Teilraum 8 begrenzt. Die Ventilscheibe 11a bildet das Ventilglied 11b des Entgasungsventils 11, das als Überdruckventil im Elektrolyt entstandenes Gas ab einer bestimmten Druckhöhe vom Teilraum 7 zum Teilraum 8 hindurchlässt, so dass das Gas durch die Öffnung 9 in die Atmosphäre gelangt.

Das Entgasungsventil 11 besteht einstückig aus einem flexiblen Kunststoff mit der Ventilscheibe 11a, an der rückseitig ein zapfenförmiger Vorsprung 12 angeformt ist, der in einer Öffnung bzw. Bohrung 13 der Querwand 6 formschlüssig einliegt. Das freie Ende des zapfenförmigen Vorsprungs 12 besitzt eine Verdickung 14, die in den Teilraum 7 hineinragt und den äußeren Rand der Bohrung 13 überragt. Durch eine in dieser Weise gestaltete Form des Zapfens 12 wird das Ventilglied von der Seite des Teilraums 8 aus in die Querwand 6 eingeclipst.

Der zweite Teilraum 8 ist zur Seite hin offen, um durch die Innenwand der den Batteriestopfen aufnehmendem Öffnung 2 der Batterie oder Batteriezelle geschlossen zu sein. Durch diese seitliche Öffnung 15 wird das Ventilglied 11 in die Querwand 6 eingesetzt.

Das Ventilglied 11b weist eine zum Raum 8 sich öffnende Sackbohrung 16 auf, die bis in den zapfenförmigen Vorsprung 12 hineinreicht.

## Patentansprüche

1. Batteriestopfen (3) einer Batterie oder einer Batteriezelle, wobei im Batteriestopfen ein Entgasungsventil (11) angeordnet ist, das im Elektrolyt entstandenes Gas ab einer bestimmten Druckhöhe ablässt, wobei der Stopfeninnenraum durch eine zur Stopfenoberseite (4) rechtwinklig oder schräg angeordnete Querwand (6) in zwei Teilräume (7, 8) aufgeteilt ist, von denen ein erster Teilraum (7) nur mit dem Zelleninnenraum und der zweite Teilraum (8) nur mit der Atmosphäre verbunden ist, wobei die Querwand (6) mindestens einen die beiden Teilräume (7, 8) verbindenden Durchlass (10) aufweist, in oder an dem das Entgasungsventil (11) angeordnet ist und **gekennzeichnet dadurch dass** der Batteriestopfen (3) bis auf das Ventilglied (11b) des Entgasungsventils einstückig ist.

2. Batteriestopfen nach Anspruch 1, **dadurch gekennzeichnet, dass** er in einer Öffnung (2) des Deckels (1) der Batterie oder der Batteriezelle einsitzt.

3. Batteriestopfen nach einem der vorherigen Ansprüche, **dadurch gekennzeichnet, dass** der zweite Teilraum (8) zur Seite hin offen ist, um durch die Innenwand der den Batteriestopfen aufnehmendem Öffnung (2) der Batterie oder Batteriezelle geschlossen zu sein.

4. Batteriestopfen nach einem der vorherigen Ansprüche, **dadurch gekennzeichnet, dass** durch die insbesondere vertikale Anordnung der Ventilschließfläche des Entgasungsventils (11) mitgerissene Elektrolytbestandteile im unmittelbaren Funktionsbereich (10a) durch die Schwerkraft reduziert werden.

5. Batteriestopfen nach einem der vorherigen Ansprüche, **dadurch gekennzeichnet, dass** das durch den Gasdruck öffnende Ventilglied des Entgasungsventils (11) eine Ventilscheibe (11a) aus flexiblen Kunststoff aufweist, die den Durchlass (10) der Querwand (6) abdeckt.

6. Batteriestopfen nach Anspruch 5, **dadurch gekennzeichnet, dass** die Ventilscheibe (11a) auf der Seite der Querwand (6) angeordnet ist, die dem Teilraum (8) zugewandt ist, der mit der Atmosphäre verbunden ist.

7. Batteriestopfen nach Anspruch 5 oder 6, **dadurch gekennzeichnet, dass** die tellerförmige Ventilscheibe (11a) einen Vorsprung insbesondere Zapfen (12) aufweist, der in einer Bohrung (13) der Querwand (6) einliegt.

8. Batteriestopfen nach Anspruch 7, **dadurch gekennzeichnet, dass** das freie Ende des Vorsprungs/Zapfens (12) eine Verdickung (14) aufweist, deren Durchmesser größer ist als der Durchmesser des Vorsprungs/Zapfens (12).

9. Batteriestopfen nach einem der vorherigen Ansprüche, d a **durch gekennzeichnet,** dass das Ventilglied (11b) eine waagerechte Bohrung (16) aufweist.

10. Batteriestopfen nach Anspruch 9, **dadurch gekennzeichnet, dass** die Bohrung (16) als Sackbohrung bis in den zapfenförmigen Vorsprung (12) hineinreicht.

## Claims

1. Battery plug (3) of a battery or a battery cell, wherein a degassing valve (11) is arranged in the battery plug, which degassing valve discharges gas which is produced in the electrolyte starting from a specific pressure level, wherein the plug interior space is subdivided into two partial spaces (7, 8) by a transverse wall (6) which is arranged at a right angle or obliquely in relation to the plug top side (4), a first partial space (7) from amongst the said two partial spaces being connected only to the cell interior space and the second partial space (8) from amongst the said two partial spaces being connected only to the atmosphere, wherein the transverse wall (6) has at least one passage (10) which connects the two partial spaces (7, 8), the degassing valve (11) being arranged in or on the said passage, and **characterized in that** the battery plug (3), apart from the valve element (11b) of the degassing valve, is in one piece.

2. Battery plug according to Claim 1, **characterized in that** it sits in an opening (2) of the cover (1) of the battery or the battery cell.

3. Battery plug according to either of the preceding claims, **characterized in that** the second partial space (8) is open towards the side in order to be closed by the inner wall of the opening (2), which receives the battery plug, of the battery or battery cell.

4. Battery plug according to one of the preceding claims, **characterized in that** electrolyte constituents which are carried along in the immediate functional region (10a) by gravity are reduced by the, in particular vertical, arrangement of the valve closing surface of the degassing valve (11).

5. Battery plug according to one of the preceding claims, **characterized in that** the valve element, which opens due to the gas pressure, of the degassing valve (11) has a valve disc (11a) composed of flexible plastic which covers the passage (10) of the transverse wall (6).

6. Battery plug according to Claim 5, **characterized in that** the valve disc (11a) is arranged on that side of the transverse wall (6) which faces the partial space (8) which is connected to the atmosphere.

7. Battery plug according to Claim 5 or 6, **characterized in that** the plate-like valve disc (11a) has a projection, in particular pin (12), which is situated in a bore (13) of the transverse wall (6).

8. Battery plug according to Claim 7, **characterized in that** the free end of the projection/pin (12) has a thickened portion (14), the diameter of which is greater than the diameter of the projection/pin (12).

9. Battery plug according to one of the preceding claims, **characterized in that** the valve element (11b) has a horizontal bore (16).

10. Battery plug according to Claim 9, **characterized in that** the bore (16) extends into the pin-like projection (12) in the form of a blind bore.

## Revendications

1. Bouchon de batterie (3) d'une batterie ou d'un élément de batterie, un clapet de dégazage (11) étant disposé dans le bouchon de batterie et permettant l'évacuation d'un gaz formé dans l'électrolyte à partir d'un niveau de pression déterminé, dans lequel l'espace intérieur du bouchon est divisé en deux sous-espaces (7, 8) par une paroi transversale (6) disposée à angle droit ou en oblique par rapport au côté supérieur du bouchon (4), un premier sous-espace (7) étant relié uniquement à l'espace intérieur de l'élément et le deuxième sous-espace (8) étant relié uniquement à l'atmosphère, dans lequel la paroi transversale (6) présente au moins un passage (10) reliant les deux sous-espaces (7, 8), le clapet de dégazage étant disposé dans ou sur ledit passage, et **caractérisé en ce que** le bouchon de batterie (3) est réalisé d'un seul tenant à l'exception de l'élément de clapet (11b) du clapet de dégazage.

2. Bouchon de batterie selon la revendication 1, **caractérisé en ce qu'**il est inséré dans une ouverture (2) du couvercle (1) de la batterie ou de l'élément de batterie.

3. Bouchon de batterie selon l'une quelconque des revendications précédentes, **caractérisé en ce que** le deuxième sous-espace (8) est ouvert sur le côté afin d'être fermé par la paroi intérieure de l'ouverture (2) recevant le bouchon de batterie de la batterie ou de l'élément de batterie.

4. Bouchon de batterie selon l'une quelconque des revendications précédentes, **caractérisé en ce que** la disposition, en particulier verticale, de la surface de fermeture de clapet du clapet de dégazage (11) permet de réduire les composants d'électrolyte entraînés par la force de gravité dans la zone fonctionnelle directe (10a).

5. Bouchon de batterie selon l'une quelconque des revendications précédentes, **caractérisé en ce que** l'élément de clapet du clapet de dégazage (11) qui s'ouvre sous l'effet de la pression du gaz présente un disque de clapet (11a) en matière plastique souple qui recouvre le passage (10) de la paroi transversale (6).

6. Bouchon de batterie selon la revendication 5, **caractérisé en ce que** le disque de clapet (11a) est disposé du côté de la paroi transversale (6) qui est tourné vers le sous-espace (8) qui est relié à l'atmosphère.

7. Bouchon de batterie selon la revendication 5 ou 6, **caractérisé en ce que** le disque de clapet (11a) en forme de plateau présente une saillie, en particulier un pointeau (12), qui est logée dans un alésage (13) de la paroi transversale (6).

8. Bouchon de batterie selon la revendication 7, **caractérisé en ce que** l'extrémité libre de la saillie/ du pointeau (12) présente une surépaisseur (14) dont le diamètre est supérieur au diamètre de la saillie/ du pointeau (12).

9. Bouchon de batterie selon l'une quelconque des revendications précédentes, **caractérisé en ce que** l'élément de clapet (11b) présente un alésage horizontal (16).

10. Bouchon de batterie selon la revendication 9, **caractérisé en ce que** l'alésage (16) sous forme de trou borgne rentre jusque dans la saillie en forme de pointeau (12).
